# EUROPÄISCHE PATENTSCHRIFT

(11) **EP 0 989 016 B1**
(45) Veröffentlichungstag und Bekanntmachung des Hinweises auf die Patenterteilung: **29.03.2006**
(21) Anmeldenummer: 99810727.0
(22) Anmeldetag: 12.08.1999
(51) Int. Cl.: B60L 9/30, H02M 1/10, H02M 5/45

(54) **Stromrichterschaltung mit variabler Konfiguration für Traktionsanwendungen**
Power converter circuit with variable configuration for traction applications
Circuit de conversion de puissance avec configuration variable pour applications à la traction

(30) Priorität: 21.09.1998 DE 19843110
(43) Veröffentlichungstag der Anmeldung: 29.03.2000
(73) Patentinhaber: Bombardier Transportation GmbH, 13627 Berlin (DE)
(72) Erfinder: Rufer, Alfred, Prof., 1138 Villars-sous-Yens (CH); Schibli, Nikolaus, 1005 Lausanne (CH)
(74) Vertreter: Cohausz & Florack

(56) Entgegenhaltungen:
- EP-A- 0 597 409
- DE-A- 4 138 256
- DE-A- 19 614 627
- DE-A- 19 630 284

## Beschreibung

### Technisches Gebiet

Die Erfindung bezieht sich auf das Gebiet der Leistungselektronik. Sie geht aus von einer Stromrichterschaltung gemäss dem Oberbegriff des ersten Anspruchs.

### Stand der Technik

Eine gattungsgemässe Stromrichterschaltung wird in der DE 196 14 627 A1 und der DE 196 30 284 A1 beschrieben. Bei Traktionsanwendungen, insbesondere bei Schienenfahrzeugen, die an Wechselspannungsnetzen, nachfolgend kurz "AC-Netze" genannt, betrieben werden, ist es notwendig, die typischerweise hohe AC-Netzspannung durch mehrere netzseitig in Serie geschaltete Teilstromrichtersysteme in Teilspannungen an den einzelnen Teilstromrichtersystemen aufzuteilen, so dass die eingesetzen Teilstromrichtersysteme mit Halbleiterschaltern üblicher Spannungsfestigkeit betreibbar sind. Ein solches Teilstromrichtersystem umfasst mindestens einen Vierquadrantensteller. Durch diese Serienschaltung der Teilstromrichtersysteme wird der üblicherweise bei Traktionsanwendungen an AC-Netzen eingesetzte netzseitige Transformator eingespart, um Gewicht und damit Kosten zu reduzieren. Den in der DE 196 30 284 A1 offenbarten Teilstromrichtersystemen folgt jeweils ein angekoppelter Gleichspannungszwischenkreis. An jedem Gleichspannungszwischenkreis ist ein zweites Teilsystem angekoppelt, das mindestens einen Wechselrichter, mindestens ein Transformator und mindestens einen Vierquadrantensteller umfasst. Das zweite Teilsystem ist entweder direkt mit mindestens einem Antriebsmotor und zugehörigem Antriebswechselrichter verbunden oder mit weiteren zweiten Teilsystemen parallel geschaltet und dann mit mindestens einem Antriebsmotor und zugehörigem Antriebswechselrichter verbunden.

Die Stromrichterschaltung nach DE 196 30 284 A1 spart zwar den netzseitigen Transformator, jedoch ist ein flexibler Betrieb der Stromrichterschaltung nach DE 196 30 284 A1 sowohl an AC-Netzen und als auch an Gleichspannungsnetzen, nachfolgend kurz als "DC-Netze" bezeichnet, nicht möglich. Gerade dies ist jedoch notwendig im Zuge eines steigenden Aufkommens im länderübergreifenden Betrieb des Schienenverkehrs an verschieden Bahnnetzen, sowohl an AC-Netzen als auch an DC-Netzen.

### Darstellung der Erfindung

Aufgabe der Erfindung ist es deshalb, eine Stromrichterschaltung mit variabler Konfiguration, insbesondere für Traktionsanwendungen ohne teueren und schweren netzseitigen Transformator, anzugeben, die es ermöglicht, einen flexiblen Betrieb sowohl an AC-Netzen als auch an DC-Netzen bereitzustellen. Diese Aufgabe wird durch die Merkmale des unabhängigen Anspruchs gelöst.

Kern der Erfindung sind Konfigurationsschalter der Stromrichterschaltung, die es mittels mehrerer Konfigurationen ermöglichen die Stromrichterschaltung für Mehrsystemanwendungen an ein AC-Netz oder ein DC-Netz anzukoppeln. Die Stromrichterschaltung umfasst Vierquadrantensteller, die für eine AC-Netzankopplung mittels einer Konfiguration der Konfigurationsschalter alle in Serie geschalten werden, so dass eine Kaskade aus Viequadrantenstellern entsteht. Für die DC-Netzankopplung werden mittels einer anderen Konfiguration der Konfigurationsschalter zuerst mehrere Vierquadrantensteller der Stromrichterschaltung in Serie geschaltet, so dass einzelne Kaskaden mit in Serie geschalteten Vierquadrantenstellem entstehen, und anschliessend werden die entstandenen einzelnen Kaskaden parallel geschaltet. Der Vorteil der über Konfigurationsschalter konfigurierbaren Stromricherschaltungsanordnung besteht darin, dass sehr einfach eine flexible Ankopplung an die verschiedensten Netze gemacht werden kann, ohne dass zusätzlich Schaltungskomponenten der Stromrichterschaltung bei einem Netzwechsel beispielsweise von einem AC-Netz zu einem DC-Netz zu- oder abgeschaltet werden müssen. Somit kann durch einfaches Konfigurieren mittels Konfigurationsschalter der Stromrichterschaltung für die Ankopplung an ein gegebenes Netz Gewicht und die daraus resultierenden Kosten von sonst im Traktionsbereich bei Mehrsystemfabrzeugen gängigen Schaltungskomponenten eingespart werden.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Eine erste erfindungsgemässe Stromrichterschaltung zur Ankopplung an ein AC-Netz oder DC-Netz;
- **Fig. 2**: Eine zweite erfindungsgemässe Stromrichterschaltung zur Ankopplung an ein AC-Netz oder DC-Netz.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

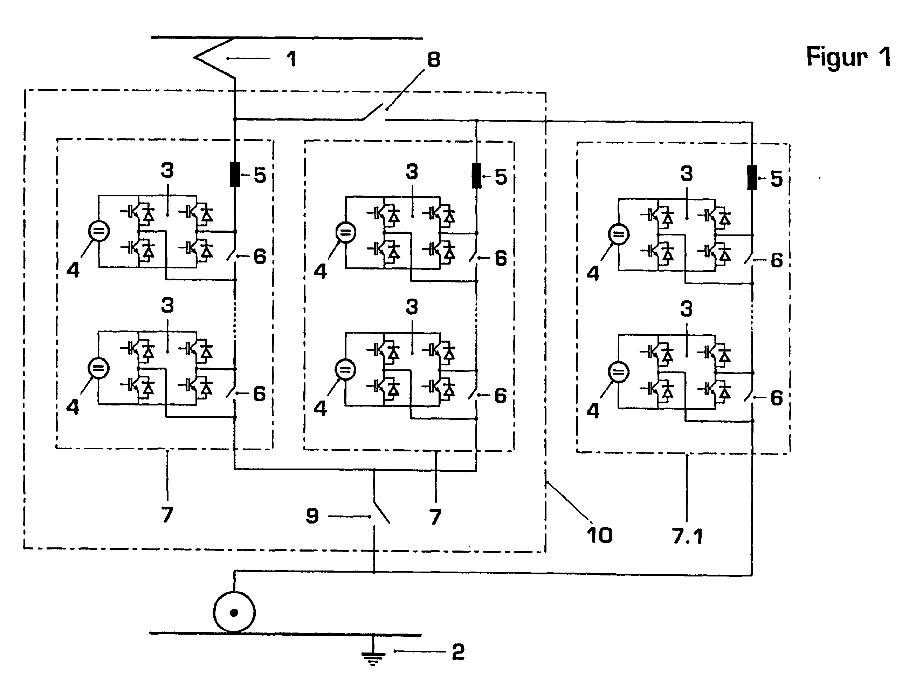

Die Stromrichterschaltung ist insbesondere für die Ankopplung an ein AC-Netz oder DC-Netz für Traktionsanwendungen geeignet. Eine erste erfindungsgemässe Ausführungsform der Stromrichterschaltungsanodnung ist in Fig.1 gezeigt. Sie umfasst mindestens drei Teilstromrichtersysteme 7, 7.1, wobei jedes Teilstromrichtersystem 7, 7.1 mindestens einen Vierquadrantensteller 3 und ein Eingangsdrosselsystem 5 umfasst. Sämtliche Vierquadrantensteller 3 eines Teilstromrichtersystems 7, 7.1 sind in Serie zu einer Kaskade geschaltet. Die Anzahl der Vierquadrantensteller 3 in einem Teilstromrichtersystem 7, 7.1 hängt von der Höhe der zulässigen Spannung an einem einzelnen Vierquadrantensteller und somit von den Eigenschaften der verwendeten Halbleiterschaltelemente im Vierquadrantensteller ab. Jeder Vierquadrantensteller 3 eines Teilstromrichtersystems 7, 7.1 weist einen Überbrückungsschalter 6 und einen gleichspannungsseitigen Gleichspannungszwischenkreis 4 auf, der als Energiespeicher dient und insbesondere bei Traktionsanwendungen typischerweise Antriebssysteme, die in Fig.1 nicht dargestellt sind, mit Energie versorgt.

Ein Konfigurationsstromrichtersystem 10 in der Stromrichterschaltung nach Fig. 1 umfasst zwei Teilstromrichtersysteme 7. Desweiteren weist das Konfigurationsstromrichtersystem 10 einen netzseitigen Konfigurationsschalter 8 und einen erdungsseitigen Konfigurationsschalter 9 auf. Je nach Höhe der Netzspannung sind die Konfigurationsschalter 8, 9 mechanisch und/oder elektronisch ausgeführt. Es hat sich als vorteilhaft erwiesen, dass bei höheren Spannungen am AC-Netz oder DC-Netz, beispielsweise im Traktionsbereich 750 V Netzspannung, die Konfigurationsschalter 8, 9 mechanisch ausgeführt sind. Bei mittleren und niederen Spannungen hingegen werden die Konfigurationsschalter 8, 9 mechanisch und/oder elektrisch ausgeführt. Desweiteren ist ein zusätzliches Teilstromrichtersystem 7.1 mit dem Konfigurationsstromrichtersystem 10 und der Erdung 2 verbunden. Sobald entsprechende elektronische Bauteile, insbesondere Halbleiterbauelemente, die als Konfigurationschalter 8,9 eingesetzt werden können, für Netzspannungen grösser oder gleich 750 V verfügbar sind, können diese auch für diesen Bereich eingesetzt werden.

Mittels der Konfigurationsschalter 8, 9 ist es sehr einfach möglich, die Stromrichterschaltung für den Betrieb an einem AC-Netz oder DC-Netz zu konfigurieren. Soll die Stromrichterschaltung beispielsweise an einem AC-Netz betrieben werden, so ist der netzseitige Konfigurationsschalter 8 geöffnet und der erdungsseitige Konfigurationsschalter 9 geöffnet. Dadurch wird erreicht, dass sämtliche Vierquadrantensteller 3 der Stromrichterschaltung in Serie geschaltet werden, so dass eine Kaskade entsteht. Die anliegende AC-Netzspannung teilt sich dann in Teilspannungen an den einzelnen in Serie geschalteten Vierquadrantenstellern 3 auf. Ein sonst bei Traktionsanwendungen für AC-Betrieb üblicher netzseitiger Transformator kann somit eingespart werden.

Für den Betrieb der Stromrichterschaltung nach Fig. 1 an einem DC-Netz wird der netzseitige Konfigurationsschalter 8 geschlossen und der erdungsseitige Konfigurationsschalter 9 geschlossen. Dadurch wird erreicht, dass die Teilstromrichtersysteme 7, 7.1 parallel geschaltet werden. Umfasst ein Teilstromrichtersystem 7, 7.1 jeweils nur einen Vierquadrantensteller 3, so arbeitet der Vierquadrantensteller 3 des jeweiligen Teilstromrichtersystems 7, 7.1 für den Betrieb an einem DC-Netz als DC-Steller. Wenn jedoch ein Teilstromrichtersystem 7, 7.1 mehrere Vierquadrantensteller 3 für den Betrieb an einem DC-Netz aufweist, so arbeiten die Vierquadrantensteller 3 im jeweiligen Teilstromrichtersystem 7, 7.1 als mehrstufige DC-Steller.

Vorteilhaft wirkt sich aus, dass sämtliche Komponenten der Stromrichterschaltung nach Fig. 1 sowohl am AC-Netz als auch am DC-Netz am Betrieb der Stromrichterschaltung beteiligt sind. Durch die Konfigurationsschalter 8, 9 ist eine technisch einfache und flexible Ankopplung an die verschiedensten Netze möglich und die typischerweise im Traktionsbereich auftretenden Komponenten von Schaltungsanordnungen insbesondere bei Mehrsystemfahrzeugen, die je nach Netzbetrieb zu oder abgeschaltet werden und trotzdem mitgeführt werden, können eingespart werden.

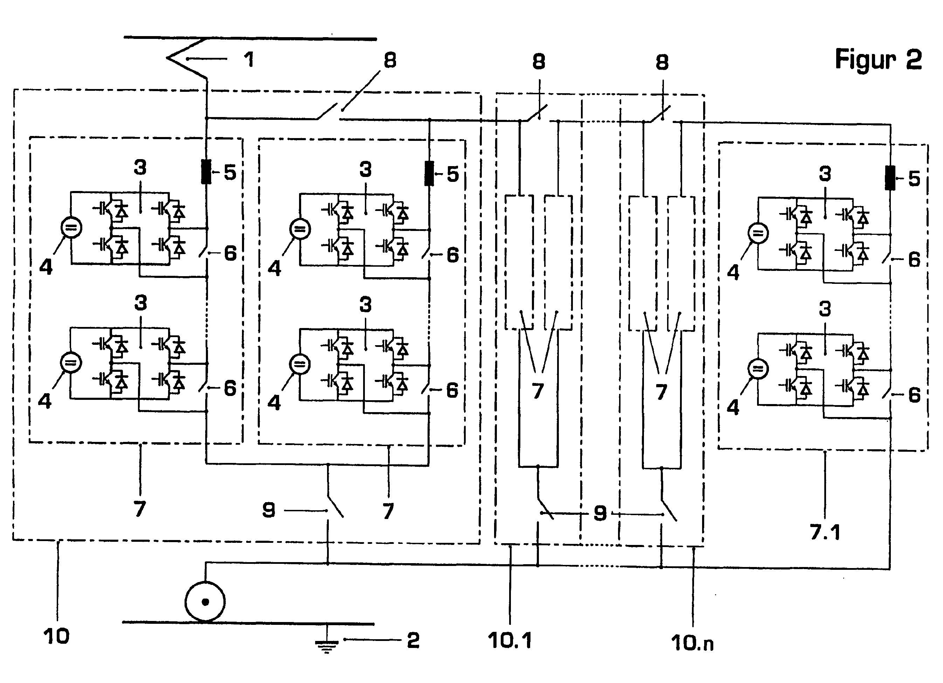

Eine zweite erfindungsgemässe Ausführungsform der Stromrichterschaltungsanodnung ist in Fig. 2 gezeigt. Ausgehend von der Ausführungsform der Stromrichterschaltung nach Fig. 1 ist es bei höheren zu übertragenden Leistungen, insbesondere bei Traktionsanwendungen beispielsweise für Mehrzwecklokomotiven, notwendig zwischen dem Konfigurationsstromrichterssystem 10 und dem Teilstromrichtersystem 7.1 mehrere Konfigurationsstromrichtersysteme 10.1...10.n (n=1, 2 ,3, ...), wie nach Fig. 2, zu schalten. Ein Konfigurationsstromrichtersystem 10.1...10.n (n=1, 2, 3, ...) umfasst wie das Konfigurationsstromrichtersystem 10 zwei Teilstromrichtersysteme 7, einen netzseitigen Konfigurationsschalter 8 und einen erdungsseitigen Konfigurationsschalter 9. Die Anzahl der verwendeten Konfigurationsstromrichtersysteme 10.1...10.n (n=1, 2, 3, ...) richtet sich dabei nach der Höhe der zu übertragenden Leistung. Das Teilstromrichtersystem 7.1 ist nach Fig. 2 mit dem Konfigurationsstromrichtersystem 10.n und der Erdung 2 verbunden.

Für den Betrieb an einem AC-Netz sind sämtliche netzseitigen Konfigurationsschalter 8 und sämtliche erdungsseitigen Konfigurationsschalter 9 der Konfigurationsstromrichtersysteme 10,10.1...10.n (n=1, 2 ,3, ...) geöffnet, hingegen sind beim Betrieb an einem DC-Netz sämtliche netzseitigen Konfigurationsschalter 8 und sämtliche erdungsseitigen Konfigurationsschalter 9 der Konfigurationsstromrichtersysteme 10, 10.1...10.n (n=1, 2 ,3, ...) geschlossen. Die bereits erwähnten Vorteile der Ausführungsform der Stromrichterschaltung nach Fig. 1 wie die Einsparung des gängigen netzseitigen Transformators bei Betrieb an einem AC-Netz und die Beteiligung sämtlicher Schaltungskomponenten der Stromrichterschaltung bei Betrieb an einem AC-Netz oder DC-Netz gelten auch für die Ausfühmngsform der Stromrichterschaltung nach Fig. 2.

### Bezugszeichenliste

- 1: AC-Netz oder DC-Netz
- 2: Erdung
- 3: Vierquadrantensteller
- 4: Gleichspannungszwischenkreis
- 5: Eingangsdrosselsystem
- 6: Überbrückungsschalter
- 7, 7.1: Teilstromrichtersystem
- 8: netzseitiger Konfigurationsschalter
- 9: erdungsseitiger Konfigurationsschalter
- 10, 10.1...10.n: Konfigurationsstromrichtersystem

## Patentansprüche

1. Stromrichterschaltung zur Ankopplung an ein Wechselspannungsnetz oder Gleichspannungsnetz, umfassend mindestens drei Teilstromrichtersysteme (7, 7.1), wobei jedes der mindestens drei Teilstromrichtersysteme (7, 7.1) mindestens einen Vierquadrantensteller (3) mit
jedes des mindestens drei Teilstromrichtersysteme (7, 7.1) ein Eingangsdrosselsystem (5) aufweist und jeder Vierquadrantensteller (3) eines Teilstromrichtersystems (7, 7.1) einen Überbrükkungsschalter (6) umfasst,
der mindestens drei zwei wobei Teilstromrichtersysteme (7) ein Konfigurationsstromrichtersystem (10) bilden und ein weiteres der mindestens drei Teilstromrichtersysteme (7.1) mit dem Konfigurationsstromrichtersystem (10) und einer Erdung (2) verbunden ist,
**dadurch gekennzeichnet, dass** das Konfigurationsstromrichtersystem (10) einen erdungsseitigen Konfigurationsschalter (9) zwischen den zwei des mindestens drei Teilstromichtersysteme (7) und der Erdung (2) und einen netzseitigen Konfigurationsschalter (8) zwischen den zwei der mindestens drei Teilstromrichtersysteme (7) aufweist, wobei bei geöffnetem erdungsseitigen und netzseitigen Konfigurationsschalter (8, 9) sämtliche nicht überbrückte Vierquadrantensteller (3) der Stromrichterschaltung in Serie geschaltet werden, und bei geschlossem erdungsseitigen und netzseitigen Konfigurationsschalter (8, 9) die mindestens drei Teilstromrichtersysteme (7, 7.1) parallel geschaltet werden.

2. Stromrichterschaltung nach Anspruch 1, **dadurch gekennzeichnet, dass** die Stromrichterschaltung zwischen dem Konfigurationsstromrichtersystem (10) und dem weiteren der mindestens drei Teilstromrichtersysteme (7.1) mindestens ein weiteres Konfigurationsstromrichtersystem (10.1... 10.n) aufweist, wobei jedes weitere konfigurationsstromrichtersystem (10.1...10.n) zwei Teilstmmrichtersysteme (7), einen erdungsseitigen Konfigurationsschalter (9) zwischen den zwei Teilstromrichtersystemen (7) des jeden weiteren Konfigurationsstromrichtersystems (10.1...10.n) und der Erdung zwei (2) und einen netzseitigen Konfigurationsschalter (8) zwischen den zwei Teilstromrichtersystemen (7) des jeden weiteren Konfigurationsstromrichtersystems (10.1 ... 1 0.n) umfasst, wobei sämtliche Teilstromrichtersysteme (7, 7.1) der Stromrichterschaltung in Serie geschaltet sind, wenn sämtliche erdungsseitigen und netzseitigen Konfigurationsschalter (8, 9) der Stromrichterschaltung geöffnet sind, und sämtliche Teilstromrichtersysteme (7, 7.1) der Stromrichterschaltung parallel geschaltet sind, wenn sämtliche erdungsseitigen und netzseitigen Konfigurationsschalter (8, 9) der Stromrichterschaltung geschlossen sind.

3. Stromrichterschaltung nach Anspruch 2, **dadurch gekennzeichnet, dass** der erdungsseitige Konfigurationsschalter (9), insbesondere bei Traktionsanwendungen bei einer Netzspannung von grösser oder gleich 750 V, mechanisch ausgeführt ist.

4. Stromrichterschaltung nach Anspruch 2, **dadurch gekennzeichnet, dass** der netzseitige Konfigurationsschalter (8), insbesondere bei Traktionsanwendungen bei einer Netzspan nung von grösser oder gleich 750 V, mechanisch ausgeführt ist.

5. Stromrichterschaltung nach Anspruch 2, **dadurch gekennzeichnet, dass** der erdungsseitige Konfigurationsschalter (9) elektronisch, insbesondere als Halbleiterbauelement, ausgeführt ist.

6. Stromrichterschaltung nach Anspruch 2, **dadurch gekennzeichnet dass** der netzseitige Konfigurationsschalter (8) elektronisch, insbesondere als Halbleiterbauelement, ausgeführt ist.

## Claims

1. Power converter circuit for connection to an AC power supply or DC power supply, comprising at least three partial power converter systems (7, 7.1), wherein each of the at least three partial power converter systems (7, 7.1) comprises at least one four-quadrant controller (3) with a DC-side DC intermediate circuit (4) and each of the at least three partial power converter systems (7, 7.1) has an input inductor system (5) and each four-quadrant controller (3) of a partial power converter system (7, 7.1) comprises a bypass switch (6), wherein two of the at least three partial power converter systems (7) form a configuration power converter system (10) and another of the at least three partial power converter systems (7.1) is connected to the configuration power converter system (10) and to earth (2), **characterized in that** the configuration power converter system (10) has an earth-side configuration switch (9) between the two of the at least three partial power converter systems (7) and earth (2) and a mains-side configuration switch (8) between the two of the at least three partial power converter systems (7), wherein, when the earth-side and mains-side configuration switches (8, 9) are open, all of the non-bypassed four-quadrant controllers (3) of the power converter circuit are connected in series and, when the earth-side and mains-side configuration switches (8, 9) are closed, the at least three partial power converter systems (7, 7.1) are connected in parallel.

2. Power converter circuit according to Claim 1, **characterized in that** the power converter circuit has at least one further configuration power converter system (10.1...10.n) between the configuration power converter system (10) and the other of the at least three partial power converter systems (7.1), wherein each further configuration power converter system (10.1...10.n) comprises two partial power converter systems (7), an earth-side configuration switch (9) between the two partial power converter systems (7) of each further configuration power converter system (10.1...10.n) and earth (2) and a mains-side configuration switch (8) between the two partial power converter systems (7) of each further configuration power converter system (10.1...10.n), wherein all the partial power converter systems (7, 7.1) of the power converter circuit are connected in series when all the earth-side and mains-side configuration switches (8, 9) of the power converter circuit are open, and all the partial power converter systems (7, 7.1) of the power converter circuit are connected in parallel when all the earth-side and mains-side configuration switches (8, 9) of the power converter circuit are closed.

3. Power converter circuit according to Claim 2, **characterized in that** the earth-side configuration switch (9) is embodied mechanically, particularly in traction applications at a mains voltage of greater than or equal to 750 V.

4. Power converter circuit according to Claim 2, **characterized in that** the mains-side configuration switch (8) is embodied mechanically, particularly in traction applications at a mains voltage of greater than or equal to 750 V.

5. Power converter circuit according to Claim 2, **characterized in that** the earth-side configuration switch (9) is embodied electronically, particularly as a semiconductor component.

6. Power converter circuit according to Claim 2, **characterized in that** the mains-side configuration switch (8) is embodied electronically, particularly as a semiconductor component.

## Revendications

1. Circuit de convertisseur de courant pour l'accouplement à un réseau à tension alternative ou réseau à tension continue, comportant au moins trois systèmes de convertisseurs de courant partiels (7, 7.1), dans lequel chacun des au moins trois systèmes de convertisseurs de courant partiels (7, 7.1) comprend au moins un organe de réglage à quatre quadrants (3) avec un circuit intermédiaire à tension continue (4) du côté tension continue, et chacun des au moins trois systèmes de convertisseurs de courant partiels (7, 7.1) présente un système d'inductances d'entrée (5), et chaque organe de réglage à quatre quadrants (3) d'un système de convertisseurs de courant partiels (7, 7.1) comporte un interrupteur de shuntage (6), deux des au moins trois systèmes de convertisseurs de courant partiels (7) formant un système de convertisseurs de courant de configuration (10), et un autre des au moins trois systèmes de convertisseurs de courant partiels (7.1) étant relié au système de convertisseurs de courant de configuration (10), et à la terre (2), **caractérisé en ce que** le système de convertisseurs de courant de configuration (10) présente un commutateur de configuration (9) du côté terre entre deux des au moins trois systèmes de convertisseurs de courant partiels (7) et la terre (2), et un commutateur de configuration (8) côté réseau entre deux au moins des trois systèmes de convertisseurs de courant partiels (7), tous les organes de réglage à quatre quadrants (3) non court-circuités du circuit à convertisseurs de courant étant connectés en série lorsque le commutateur de configuration (8, 9) est ouvert du côté terre et du côté réseau, et les au moins trois systèmes de convertisseurs de courant partiels (7, 7.1) étant connectés en parallèle lorsque le commutateur de configuration (8, 9) est fermé du côté terre et du côté réseau.

2. Circuit de convertisseur de courant selon la revendication 1, **caractérisé en ce que** le circuit à convertisseurs de courant entre le système de convertisseurs de courant de configuration (10) et l'autre des au moins trois systèmes de convertisseurs de courant partiels (7.1) comporte au moins un autre système de convertisseurs de courant de configuration (10.1... 10.n), dans lequel chaque autre système de convertisseurs de courant de configuration (10.1...10.n) comporte deux systèmes de convertisseurs de courant partiels (7), un commutateur de configuration (9) du côté terre entre les deux systèmes de convertisseurs de courant partiels (7) de chaque autre système de convertisseurs de courant de configuration (10.1... 10.n) et la terre (2), et un commutateur de configuration (8) du côté réseau entre les deux systèmes de convertisseurs de courant partiels (7) de chaque autre système de convertisseurs de courant de configuration (10.1... 10.n), tous les systèmes de convertisseurs de courant partiels (7, 7.1) du circuit à convertisseurs partiels étant connectés en série lorsque tous les commutateurs de configuration (8, 9) du côté terre et réseau du circuit à convertisseurs de courant sont ouverts, et tous les systèmes de convertisseurs de courant partiels (7, 7.1) du circuit à convertisseurs de courant étant connectés en parallèle lorsque tous les commutateurs de configuration (8, 9) du côté terre et réseau du circuit à convertisseurs de courant sont fermés.

3. Circuit à convertisseurs de courant selon la revendication 2, **caractérisé en ce que** le commutateur de configuration (9) du côté terre est réalisé de manière mécanique, en particulier pour des applications de traction avec une tension de réseau supérieure ou égale à 750 V.

4. Circuit de convertisseur de courant selon la revendication 2, **caractérisé en ce que** le commutateur de configuration (8) du côté réseau est réalisé de manière mécanique, en particulier dans les applications de traction avec une tension de réseau supérieure ou égale à 750 V.

5. Circuit de convertisseur de courant selon la revendication 2, **caractérisé en ce que** le commutateur de configuration (9) du côté terre est réalisé de manière électronique, en particulier sous la forme d'un composant semi-conducteur.

6. Circuit de convertisseur de courant selon la revendication 2, **caractérisé en ce que** le commutateur de configuration (8) du côté réseau est réalisé de manière électronique, en particulier sous la forme d'un composant semi-conducteur.
